# FASCICULE DE BREVET EUROPEEN

(11) **EP 3 816 523 B1**
(45) Date de publication et mention de la délivrance du brevet: **03.01.2024**
(21) Numéro de dépôt: 20203848.5
(22) Date de dépôt: 26.10.2020
(51) Int. Cl.: F24D 19/00, F24D 19/10

(54) **INSTALLATION DE CHAUFFAGE D'UN LOCAL COMPRENANT UN DISPOSITIF DE PROTECTION CONTRE LE GEL EN CAS D'ABSENCE D'ALIMENTATION ELECTRIQUE**
HEIZUNGSANLAGE FÜR EINEN RAUM MIT EINER FROSTSCHUTZVORRICHTUNG IM FALLE EINER FEHLENDEN STROMVERSORGUNG
INSTALLATION FOR HEATING A ROOM COMPRISING A DEVICE FOR PROTECTING AGAINST FREEZING IN THE EVENT OF ABSENCE OF POWER SUPPLY

(30) Priorité: 29.10.2019 FR 1912093
(43) Date de publication de la demande: 05.05.2021
(73) Titulaire: Société Industrielle de Chauffage (SIC), 59660 Merville (FR)
(72) Inventeur: ANTOINE, Emmanuel, 59270 BAILLEUL (FR); SAISSET, Luc, 38460 Villemoirieu (FR); CASTELEYN, Damien, 59700 Marcq-en-Baroeul (FR)
(74) Mandataire: Ipsilon

(56) Documents cités:
- EP-A1- 2 149 758
- EP-A1- 3 412 985
- FR-A3- 2 444 900
- US-A1- 2010 241 401

## Description

L'invention concerne une installation de chauffage d'un local, notamment une installation de chauffage dont une portion est disposée à l'extérieur du local.

Dans les installations de chauffage, il est connu que des tuyauteries puissent être exposées à l'environnement extérieur. C'est notamment le cas dans une installation de chauffage comprenant un générateur de chauffage à l'extérieur du local à chauffer et un réseau de chauffage disposé à l'intérieur du local. Le réseau de transport du fluide caloporteur entre le générateur de chauffage et le réseau de chauffage est exposé à l'environnement extérieur.

Ces tuyauteries reliant le générateur de chauffage et le réseau de chauffage disposées à l'extérieur sont soumises au risque de gel du fluide caloporteur qu'elles contiennent, de même que certaines parties du générateur de chauffage lui-même. Ce risque de gel est notamment fonction de la nature du fluide caloporteur et des conditions climatiques. Une détérioration de tout ou partie de l'installation de chauffage peut intervenir lorsque les conditions d'apparition du gel sont réunies.

Pour remédier au problème du gel plusieurs solutions sont envisageables, parmi lesquelles des solutions actives visent à élever la température du fluide caloporteur ou à mettre en mouvement ce fluide caloporteur. Ces solutions actives sont généralement mises en oeuvre de manière automatique lorsque des conditions prédéterminées sont atteintes de manière à prévenir le gel du fluide caloporteur. Ces solutions actives sont généralement mises en oeuvre par des organes alimentés en énergie électrique, notamment par le réseau électrique alimentant l'installation de chauffage.

Ces solutions actives ont pour inconvénient d'être dépendantes du bon fonctionnement de l'alimentation électrique de sorte qu'elles sont inopérantes si une défaillance du réseau électrique intervient. Ces organes sont donc inopérants dans le cas d'une panne du réseau électrique laissant l'installation de chauffage sans protection active contre le gel.

Il existe également des solutions passives permettant de limiter les risques de gel, comprenant notamment :
- l'ajout d'une ou de plusieurs substances chimiques (antigel) dans l'eau de l'installation afin d'abaisser la température de congélation du mélange eau-substance(s) chimique(s) ;
- l'utilisation de système mécaniques assurant la vidange complète du fluide caloporteur dans les tuyauteries exposées au risque de gel lorsque des conditions prédéterminées sont réunies ;
- les tuyauteries peuvent être isolées de l'air ambiant par une couche de matériau absorbant ;
- les tuyauteries peuvent être enterrées dans le sol à une profondeur suffisante pour ne pas risquer le gel du fluide caloporteur.

Ces solutions passives ont pour inconvénient d'être onéreuses, de nécessiter un entretien plus important et de complexifier la conception des installations. De plus, ces solutions peuvent être inadaptées dans certaines configurations, notamment lorsqu'une pente minimale est nécessaire pour la réalisation d'un système de vidange. L'utilisation d'un système de vidange nécessite également l'intervention d'un technicien pour remettre en fonctionnement le système de chauffage après déclenchement. Par ailleurs, l'isolation des tuyauteries et du générateur n'empêche pas le gel mais permet uniquement de retarder son apparition.

Le document US2010/241401 A1 divulgue une installation de chauffage d'un local ayant les caractéristiques du préambule de la revendication 1.

L'invention prévoit de remédier à au moins un des inconvénients précités en proposant une installation de chauffage d'un local selon la revendication 1. Cette installation comprend un réseau électrique collectif ou domestique du local, un dispositif de chauffage d'un fluide, un dispositif récepteur du fluide et un circuit de transport du fluide entre le dispositif de chauffage et le dispositif récepteur, au moins une portion du circuit de transport étant disposée à l'extérieur du local, l'installation comprenant en outre une pompe d'entraînement du fluide à l'intérieur du circuit de transport et un dispositif protection contre le gel du fluide à l'intérieur du circuit de transport, la pompe d'entrainement étant alimenté en énergie électrique par le réseau électrique collectif ou domestique du local et dans laquelle le dispositif de protection est configuré pour entraîner le fluide à l'intérieur du circuit de transport lorsque la pompe d'entrainement n'est plus alimentée en énergie électrique provenant du réseau électrique collectif ou domestique et que la température à l'extérieur du local et/ou la température du fluide atteint un seuil considéré comme risquant d'entrainer un gel dudit fluide,
dans laquelle le dispositif de protection comprend l'un parmi :
- une pompe auxiliaire raccordée au circuit de transport pour l'entrainement du fluide à l'intérieur du circuit de transport et un accumulateur d'énergie électrique configuré pour alimenter en énergie électrique la pompe auxiliaire ;
- une pompe auxiliaire raccordée au circuit de transport pour l'entrainement du fluide à l'intérieur du circuit de transport et une turbine d'entraînement en rotation de la pompe auxiliaire, la turbine étant configurée pour être entraînée en rotation par un écoulement d'eau provenant d'un circuit d'alimentation collectif sous pression s'écoulant ensuite vers une évacuation d'eaux usées du local, l'installation de chauffage comprenant ledit circuit d'alimentation collectif sous pression et ladite évacuation d'eaux usées du local.

La présence du dispositif de protection permet d'entraîner le fluide à l'intérieur du circuit de transport lorsque la pompe d'entrainement n'est plus alimentée en énergie électrique provenant du réseau électrique collectif ou domestique. La protection de l'installation contre le gel est donc rendue indépendante de la bonne alimentation de la pompe d'entraînement par le réseau électrique collectif ou domestique. La protection contre le gel est ainsi rendue plus fiable et permet à l'installation d'être plus robuste en réduisant les risques de détérioration de celle-ci dans le temps.

Le réseau électrique collectif ou domestique est le réseau électrique principal alimentant l'installation de chauffage, notamment la pompe d'entraînement, en phase de chauffage du local 12. Ce réseau domestique ou collectif correspond au réseau électrique accessible au niveau du local 12.

Une défaillance de l'alimentation électrique de la pompe d'entraînement peut intervenir lors d'une panne du réseau électrique collectif ou domestique interrompant l'alimentation électrique de toute l'installation de chauffage. La défaillance d'alimentation de la pompe d'entraînement peut également être due à un défaut de connexion électrique empêchant son alimentation électrique. Lors d'une défaillance d'alimentation électrique, la pompe d'entraînement ne peut être mise en route à l'aide du réseau électrique collectif ou domestique.

En permettant une mise en circulation du fluide à l'intérieur du circuit de transport, le dispositif de protection forme un dispositif auxiliaire de mise en circulation du fluide palliant ainsi un éventuel dysfonctionnement de l'alimentation de la pompe d'entraînement ou un dysfonctionnement de la pompe d'entraînement elle-même.

L'installation est plus robuste en comparaison avec les solutions actives existantes car elle sera protégée contre le gel de manière plus importante. La plage de fonctionnement de l'installation est également étendue par rapport aux installations existantes pour lesquelles une maintenance est nécessaire après un épisode de gel du fluide.

Lorsque l'installation fonctionne normalement (en service et sans défaillance), l'installation permet ainsi de maintenir une température et un débit d'eau dans l'installation qui sont suffisants pour éviter les conditions de gel de l'eau dans les composants de l'installation.

De plus, la mise en mouvement du fluide est réalisée lorsque la température à l'extérieur du local et/ou la température du fluide atteint un seuil considéré comme risquant d'entrainer un gel du fluide. Ceci permet d'actionner le dispositif de protection uniquement lorsqu'un risque imminent est détecté.

Selon un mode de réalisation de l'installation de chauffage, l'accumulateur d'énergie électrique est configuré pour être raccordé au réseau électrique collectif ou domestique pour permettre le rechargement de l'accumulateur d'énergie électrique par le réseau électrique collectif ou domestique.

Selon un mode de réalisation de l'installation de chauffage, celle-ci comprend en outre un capteur photovoltaïque configuré pour recharger l'accumulateur d'énergie électrique.

Selon un mode de réalisation de l'installation de chauffage, lorsque le dispositif de protection comprend la turbine d'entraînement en rotation de la pompe auxiliaire, la pompe auxiliaire comprend un arbre moteur, la turbine comprenant un arbre d'hélice accouplé à l'arbre moteur de la pompe auxiliaire et une hélice fixée à l'arbre d'hélice, l'hélice étant en communication de fluide avec le circuit de transport collectif d'eau pour l'entraînement en rotation de l'arbre d'hélice et de l'arbre moteur de la pompe auxiliaire.

Selon un mode de réalisation de l'installation de chauffage, la pompe auxiliaire est disposée au niveau d'une conduite de dérivation d'une conduite principale du circuit de transport, chaque extrémité de la conduite de dérivation étant raccordée à la conduite principale, le dispositif de protection comprenant en outre un clapet unidirectionnel disposé dans la conduite principale entre les extrémités de la branche de dérivation pour permettre la circulation sélective du fluide au travers de la conduite principale ou de la conduite de dérivation.

Selon un mode de réalisation de l'installation de chauffage, le dispositif de protection comprend :
- un dispositif de détection d'un arrêt de l'alimentation électrique de la pompe d'entraînement par le réseau électrique collectif ou domestique,
- une sonde de température apte à mesurer la température extérieure au local ou/et la température du fluide contenu dans le circuit de transport, et
- un circuit électronique de commande configuré pour actionner l'entrainement du fluide à l'intérieur du circuit de transport lorsque le dispositif de détection détecte l'arrêt de l'alimentation électrique par le réseau électrique collectif ou domestique et que la température à l'extérieur du local et/ou la température du fluide atteint un seuil considéré comme risquant d'entrainer un gel dudit fluide.

Selon un mode de réalisation de l'installation de chauffage, le dispositif de protection comprend un relais électrique pour détecter un arrêt de l'alimentation électrique de la pompe principale et un thermostat pour détecter la température à l'extérieur du local et/ou la température du fluide.

Selon un mode de réalisation de l'installation de chauffage, lorsque le dispositif de protection comprend la turbine d'entraînement en rotation de la pompe auxiliaire, le dispositif de protection comprend une électrovanne montée sur le circuit d'alimentation collectif configurée pour laisser s'écouler l'eau circulant à l'intérieur du circuit d'alimentation collectif lorsque l'électrovanne n'est plus alimentée électriquement et un robinet thermostatique monté en série avec l'électrovanne sur le circuit d'alimentation collectif.

Selon un mode de réalisation de l'installation de chauffage, le dispositif de chauffage est disposé à l'extérieur du local, le circuit de transport du fluide étant au moins partiellement disposé à l'extérieur du local.

L'invention concerne également un procédé de protection du circuit de transport de fluide de l' installation de chauffage telle que décrite ci-dessus, comprenant les étapes suivantes :
- Détecter un arrêt de l'alimentation électrique de la pompe d'entraînement par le réseau électrique collectif ou domestique,
- Détecter l'atteinte par la température à l'extérieur du local et/ou la température du fluide d'un seuil considéré comme risquant d'entrainer un gel dudit fluide,
- Mettre en oeuvre le dispositif de protection contre le gel pour permettre l'entrainement du fluide à l'intérieur du circuit de transport.

### Brève description des dessins

Les dessins annexés illustrent l'invention :
[Fig. 1] représente schématiquement une installation qui ne fait pas partie de l'invention,
[Fig. 2] représente schématiquement une installation selon un premier mode de réalisation de l'invention,
[Fig. 3] représente schématiquement une installation selon un deuxième mode de réalisation de l'invention.

### Description de mode(s) de réalisation

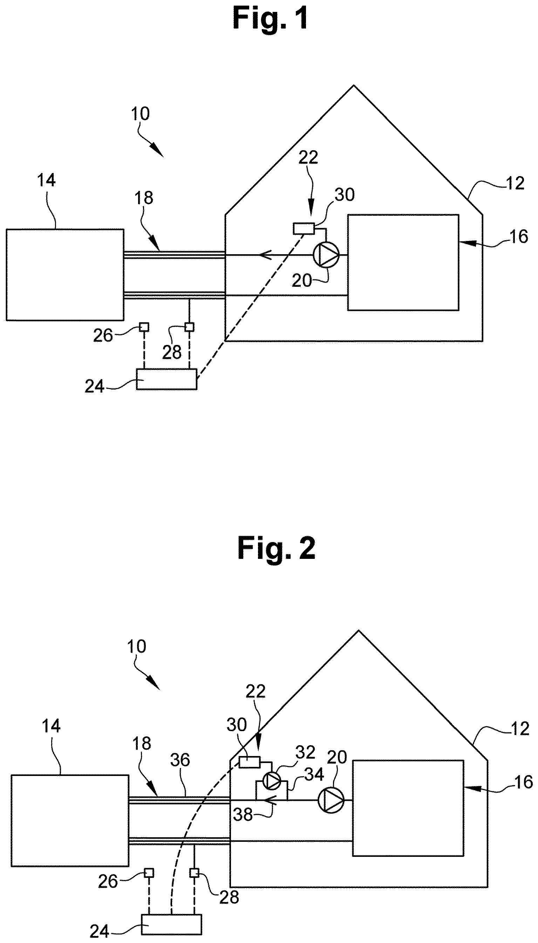

Tel que représenté en figure 1, une installation de chauffage 10 d'un local 12 comprend un dispositif de chauffage 14 d'un fluide, un dispositif récepteur 16 du fluide et un circuit de transport 18 du fluide entre le dispositif de chauffage 14 et le dispositif récepteur 16.

Le fluide utilisé pour chauffer le local 12 et circulant à l'intérieur du circuit de transport 18 est de préférence de l'eau de chauffage. L'eau de chauffage n'est généralement pas de l'eau pure mais plutôt une solution aqueuse provenant d'un réseau d'eau de ville ou d'eaux mortes comprenant généralement des additifs divers. De manière alternative, un fluide autre que l'eau peut être utilisé. Les valeurs de seuil de température mentionnées dans la présente description sont données pour de l'eau comme fluide. Dans le cas où le fluide serait différent de l'eau, les conditions d'apparition du gel et notamment ces seuils de températures seront ajustés en fonction de la température de solidification dudit fluide.

Le local 12 peut être un bâtiment ou une maison comprenant une ou plusieurs pièces. L'installation de chauffage 10 peut être configurée pour chauffer tout ou partie de ces pièces. L'installation de chauffage 10 peut notamment être configurée pour chauffer sélectivement certaines pièces du local 12. A fins de clarté du présent exposé, on considérera par la suite que le local 12 fait référence au bâtiment ou à la maison considérée. Ainsi, lorsqu'il est indiqué qu'un élément est à l'intérieur ou à l'extérieur du local 12, il faut considérer que cet élément est à l'intérieur ou à l'extérieur du bâtiment ou de la maison considérée.

L'intérieur du local 12 peut être défini comme étant une pièce du local 12. L'intérieur du local 12 peut être également défini comme étant une zone au moins partiellement délimitée par des murs et un plafond. De manière préférée la zone considérée est close ou peut être fermée. De manière usuelle, on considère l'intérieur de local 12 comme une zone pouvant être isolée dans laquelle la température ambiante est supérieure à celle hors du local 12. Cette zone est donc peu ou pas sujette aux risques de gel.

L'extérieur du local 12 peut être défini comme toute zone pouvant être soumise aux risques de gel, en particulier, tout zone au niveau de laquelle la température ambiante peut être inférieure ou égale à 0°C. Cette zone peut délimitée par des murs et/ou un plafond du local 12, comme par exemple un préau ou un local technique ouvert à l'air libre.

Le dispositif de chauffage 14, aussi appelé générateur de chauffage, a pour fonction de chauffer le fluide présent dans le circuit de transport 18 pour permettre ensuite le chauffage du local 12. Le dispositif de chauffage 14 peut utiliser tout type de technologie permettant d'élever la température du fluide présent dans le circuit de transport 18.

Selon un mode de réalisation, le dispositif de chauffage 14 comprend un système de pompe à chaleur exploitant l'air extérieur comme source froide pour chauffer le fluide présent à l'intérieur du circuit de transport 18. On entend ici par « système de pompe à chaleur » un système ayant une boucle de circulation d'un fluide caloporteur comportant un compresseur, un condenseur, un évaporateur ainsi qu'un détendeur. Le dispositif de chauffage 14 est ici disposé entièrement à l'extérieur du local 12. Le système de pompe à chaleur est de préférence monobloc, c'est-à-dire que l'ensemble de la boucle de circulation et de ses composants est disposé dans un même boîtier.

Le circuit de transport 18 permet de déplacer le fluide depuis le dispositif de chauffage 14 où le fluide est chauffé jusqu'au dispositif récepteur 16 où la chaleur du fluide est transférée au dispositif récepteur 16 pour le chauffage du local 12. Le circuit de transport 18 comprend également un conduit de retour du fluide depuis le dispositif récepteur 16 vers le dispositif de chauffage 14 pour réaliser une boucle de circulation du fluide. Le déplacement du fluide à l'intérieur du circuit de transport 18 est réalisé par une pompe d'entrainement 20, autrement appelé circulateur. La pompe d'entrainement 20 est alimentée en énergie électrique par un réseau électrique collectif ou domestique du local 12. Ce réseau électrique correspond à une réseau électrique accessible au niveau du local 12 permettant d'alimenter l'installation de chauffage 10 en fonctionnement normal, c'est-à-dire lorsqu'il n'y aucune défaillance de l'installation de chauffage 10 ou du réseau électrique. Sauf défaillance du réseau électrique, celui-ci permet d'alimenter de manière continue et pérenne la pompe d'entraînement 20. Ce réseau électrique collectif ou domestique peut être considéré comme un réseau électrique principal alimentant l'installation de chauffage par défaut.

Le circuit de transport 18 comprend au moins une portion disposée à l'extérieur du local 12. En d'autres termes, le circuit de transport 18 comprend au moins une portion soumise aux risques de gel du fluide présent à l'intérieur du circuit de transport 18. Les conditions d'apparition du gel sont réunies pour de l'eau de chauffage lorsque la température extérieure est égale ou inférieure à 0°C et que la vitesse du fluide à l'intérieur du circuit de transport 18 est trop faible ou nulle à l'intérieur du circuit de transport 18. On peut considérer qu'à une vitesse égale ou supérieure à 1 m/s l'eau de chauffage ne risque pas de geler. Ainsi, on peut généralement considérer qu'un risque de gel de l'eau de chauffage est présent lorsque la vitesse de l'eau de chauffage est inférieure à 1 m/s et que la température de l'eau de chauffage ou la température extérieure au local 12 est inférieure ou égale à une température critique pour le gel, par exemple 0°C. De plus, les conditions d'apparition du gel peuvent dépendre également de la température de l'eau de chauffage avant l'épisode de risque de gel. Les tuyauteries disposées à l'extérieur du local 12 peuvent être isolées de l'air ambiant par une couche de matériau absorbant pour retarder les effets du gel.

Dans les figures 1 à 3, ladite au moins une portion disposée à l'extérieur du local 12 correspond aux tuyauteries entre le dispositif de chauffage 14 disposé à l'extérieur du local 12 et le dispositif récepteur 16. Ainsi, le circuit de transport 18 est partiellement à l'extérieur du local 12 car le dispositif de chauffage 14 est à l'extérieur du local 12. Le dispositif de chauffage 14 est disposé à l'extérieur du local 12 notamment pour éloigner le dispositif de chauffage 14 du local 12. En effet, le dispositif de chauffage 14 peut comprendre des composants présentant un danger en cas de défaillance. C'est notamment le cas lorsque le dispositif de chauffage 14 utilise un fluide caloporteur pouvant être toxique pour l'homme, notamment les fluides caloporteurs sous forme gazeuse.

De manière alternative, le dispositif de chauffage 14 peut être disposé à l'intérieur du local 12. Dans ce cas, le circuit de transport 18 comprend également au moins une portion à l'extérieur du local 12 qui est donc soumise aux risques du gel. Cette configuration peut notamment être utilisée en raison de contraintes techniques ou parce que l'installation de chauffage 10 utilise un réseau de tuyauterie existant.

Le dispositif récepteur 16 a pour fonction de transférer la chaleur du fluide présent à l'intérieur du circuit de transport 18 à l'intérieur du local 12. Le dispositif récepteur 16 peut être un radiateur, un plancher chauffant ou bien système d'insufflation d'air chaud.

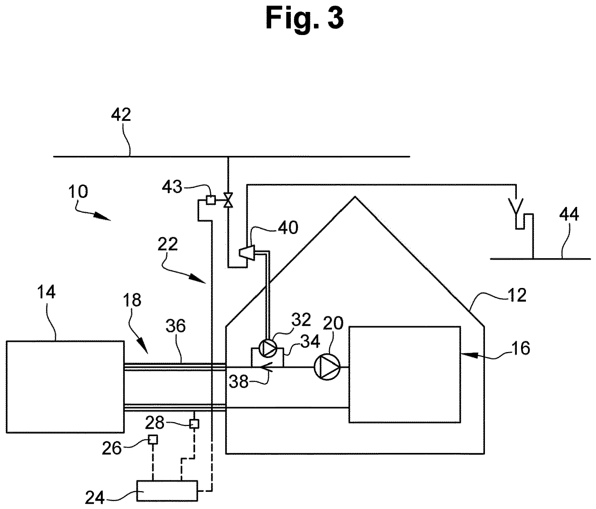

L'installation de chauffage comprend également un dispositif de protection 22 contre le gel du fluide à l'intérieur du circuit de transport 18. Le dispositif de protection 22 est configuré pour entraîner le fluide à l'intérieur du circuit de transport 18 même lors d'une défaillance du réseau électrique collectif ou domestique. En particulier, le dispositif de protection 22 est configuré pour entraîner le fluide lorsque la pompe d'entrainement 20 n'est plus alimentée en énergie électrique provenant du réseau électrique collectif ou domestique. Pour cela, le dispositif de protection 22 peut comprendre un dispositif de détection d'un arrêt de l'alimentation électrique de la pompe d'entraînement par le réseau électrique collectif ou domestique. Dès lors, le dispositif de protection 22 est capable de détecter un arrêt de la circulation du fluide à l'intérieur du circuit de transport 18 car la pompe d'entraînement 20 n'est plus alimentée en énergie électrique. Sans circulation du fluide, un risque de gel de celui-ci peut intervenir si les conditions climatiques sont réunies. Ainsi, le dispositif de détection permet au dispositif de protection d'anticiper un potentiel risque de gel du fluide à l'intérieur du circuit de transport 18. Le dispositif de détection peut par exemple comprendre un relais électrique configuré pour détecter un arrêt de l'alimentation électrique de la pompe principale 20. Le relais électrique est ainsi de préférence un relais électrique normalement fermé et monté en série sur le circuit d'alimentation électrique de la pompe principale 20. Le dispositif de détection peut de manière alternative comprendre une électrovanne normalement ouverte. L'électrovanne peut ainsi être utilisée pour la détection d'une coupure d'alimentation électrique lorsque l'entraînement du fluide dans le circuit de transport 18 est réalisé par une pompe auxiliaire dont l'entraînement est réalisé en utilisant l'écoulement d'un autre circuit de transport d'eau, tel qu'un circuit d'alimentation collectif. En installant l'électrovanne normalement ouverte sur le circuit d'alimentation collectif, il est possible d'autoriser l'écoulement du fluide dans ce circuit d'alimentation collectif, et donc l'entrainement de la pompe auxiliaire, uniquement lors d'une coupure d'alimentation électrique. Cette électrovanne est discutée ci-après en lien avec la figure 3.

Le dispositif de protection 22 peut comprendre un circuit électronique de commande 24 connecté au dispositif de détection de manière à recevoir les informations provenant de celui-ci. Le circuit électronique de commande 24 est configuré pour actionner l'entrainement du fluide à l'intérieur du circuit de transport 18 notamment en fonction des informations transmises par le dispositif de détection. Le dispositif de protection peut ainsi être actionné automatiquement lorsqu'une défaillance du réseau électrique est détectée. Cet actionnement automatique peut intervenir immédiatement après que la défaillance a été détectée ou plus tard, selon les conditions associées au risque de gel.

Le dispositif de protection 22 peut également être configuré pour déterminer la température à l'extérieur du local 12 de manière à déterminer le risque de gel. Ainsi, le dispositif de protection 22 peut comprendre un thermostat réglé sur un seuil prédéterminé pour transmettre un signal d'atteinte d'une température critique pour le gel, par exemple 0°C. De manière alternative encore, le dispositif de protection 22 peut comprendre une sonde externe de température 26 configurée pour mesurer la température extérieure au local 12. La sonde externe de température 26 est connectée au circuit électronique de commande 24 pour transmettre des mesures de température ou informations représentative de la température à l'extérieur du local 12.

La sonde externe de température 26 peut être disposée au niveau du circuit de transport 18 pour obtenir une valeur de température au plus proche de la tuyauterie extérieure au local 12. De manière alternative, la sonde externe de température 26 peut être disposée au niveau du dispositif de chauffage 14 lorsque celui-ci est disposé à l'extérieur du local 12 pour faciliter son intégration à l'installation de chauffage 10. De manière encore alternative, la sonde externe de température 26 peut être déportée du circuit de circulation 18 et du dispositif de chauffage 14 pour permettre à un utilisateur de la placer où il le souhaite.

De manière combinée ou alternative à la détermination de la température à l'extérieur du local 12, le dispositif de protection 22 peut être configuré pour déterminer la température du fluide à l'intérieur du circuit de transport 18. Ainsi, le dispositif de protection 22 peut comprendre un robinet thermostatique taré à cette température critique pour le gel, par exemple 0°C. De manière alternative, le dispositif de protection 22 peut comprendre une sonde interne de température 28 configurée pour mesurer la température du fluide à l'intérieur du circuit de transport 18. De manière similaire à la sonde externe de température 26, la sonde de température 26 est connectée au circuit électronique de commande 24 pour transmettre des mesures de température ou informations représentatives de la température du fluide.

La possibilité de déterminer l'atteinte de deux seuils correspondant à des températures d'éléments différents et représentatifs d'un risque de gel du fluide permet de fiabiliser la prévention du gel du fluide. Il est possible d'attendre l'atteinte de l'un ou des deux seuils pour déclencher l'entraînement du fluide. Dans le cas où au moins un seuil est considéré, le déclenchement de l'entrainement du fluide peut être réalisé plus rapidement et être moins dépendant d'une défaillance de l'une des sondes. Dans le cas où les deux seuils sont considérés pour le déclenchement de l'entrainement du fluide, une détermination plus précise des risques de gel peut être réalisée ou pour réaliser une détermination en cascade du risque de gel. En effet, l'atteinte du seuil par la température de l'air extérieur au local 12 peut correspondre à un premier niveau de risque de gel et l'atteinte du seuil de la température du fluide peut correspondre à un deuxième niveau de risque de gel. Il peut être décidé de déclencher l'entraînement du fluide soit au premier niveau soit au deuxième niveau.

Selon un mode opératoire préféré, le circuit électronique de commande 24 détermine si un risque de gel du fluide existe en fonction de l'état de déclenchement du dispositif de détection et de l'une ou les deux parmi la température à l'extérieur du local 12 et la température du fluide. En particulier, l'entraînement du fluide peut être déclenché si une défaillance du réseau électrique est détectée et que la température extérieure au local 12 et/ou la température du fluide atteint un seuil considéré comme risquant d'entrainer un gel dudit fluide. On considère par exemple qu'une température extérieure ou une température du fluide d'une valeur inférieure ou égale à 0°C risque d'entraîner un gel du fluide si celui-ci stagne. Il est à noter que les seuils considérés pour la température extérieure et pour la température du fluide peuvent être différents. De plus, plusieurs seuils peuvent être considérés pour chacune des températures extérieures et du fluide de manière à déterminer l'évolution de la température pour anticiper les risques de gel.

Selon les composants choisis pour la détection d'un arrêt de l'alimentation électrique et de la détection de la température extérieure au local 12 ou du fluide, il est possible de définir le degré de complexité de la commande du dispositif de protection 22.

Le dispositif de protection 22 peut être commandé par un relais électrique et un thermostat montés en série sur le circuit d'alimentation électrique de la pompe principale 20 pour obtenir une commande électromécanique simple, ne nécessitant pas d'alimentation électrique propre et peu onéreuse.

Le dispositif de protection 22 peut être alternativement commandé par une électrovanne normalement ouverte et un robinet thermostatique pour commander l'entrainement d'une pompe auxiliaire. Cette commande du dispositif de protection 22 permet d'obtenir une commande électromécanique adaptée à un entraînement d'une pompe auxiliaire par le biais d'un circuit d'alimentation collectif. Cette commande électromécanique est également simple, peu onéreuse et ne nécessite pas d'alimentation électrique propre.

La commande du dispositif de protection est possible en utilisant un circuit électronique de commande 24 associée à une ou plusieurs sondes de température. La commande du dispositif de protection 22 peut ainsi être plus complète en permettant notamment de faire intervenir plusieurs seuils de déclenchement, de suivre en temps réel le risque de gel ou encore de reprogrammer à distance le dispositif de protection 22.

Le déclenchement de l'entrainement du fluide est de préférence réalisé suivant le procédé suivant.

Un arrêt de l'alimentation électrique de la pompe d'entraînement par le réseau électrique collectif ou domestique est détecté. Cette détection peut être réalisée durant une phase de chauffage du local 12 ou bien lors d'une phase de veille ou d'arrêt précédant ou suivant une phase de chauffage. En d'autres termes, la détection de l'absence d'alimentation électrique peut être réalisée à un moment où le fluide à l'intérieur de l'installation est à une température de chauffage du local 12 ou à une température de veille. De manière préférée, le dispositif de détection transmet à intervalles réguliers une information représentative de l'absence d'alimentation électrique de manière à pouvoir informer le circuit électronique de commande 24 d'un potentiel rétablissement de cette alimentation.

Lorsqu'une absence d'alimentation électrique de la pompe d'entraînement 20 est détectée par le dispositif de détection, le circuit électronique de commande 24 interroge à intervalles réguliers l'une ou les deux parmi les sondes externe 26 et interne 28 de température pour déterminer si la température à l'extérieur du local 12 et/ou la température du fluide ont atteint leur seuil considéré comme risquant d'entrainer un gel du fluide. Le circuit électronique de commande 24 compare ensuite les valeurs de température à l'extérieur du local 12 et/ou du fluide à leur seuil respectif. Si au moins l'un des seuils est atteint alors qu'une absence d'alimentation électrique de la pompe d'entraînement 20 a été détecté au préalable, l'entraînement du fluide à l'intérieur du circuit de transport 18 est déclenché. Si aucun des seuils n'est atteint, l'étape de comparaison se poursuit.

De manière alternative, la détermination de l'atteinte du ou des seuils peut être réalisée avant ou en parallèle de la détermination de l'absence d'alimentation électrique. Quel que soit l'ordre de détermination, le déclenchement de l'entraînement du fluide est réalisé lorsque l'absence d'alimentation électrique est détectée et que l'un au moins des seuils de température est atteint. Cette détermination est notamment réalisée en parallèle lorsque la commande est réalisée par un relais électrique associé à un thermostat ou bien par une électrovanne et un robinet thermostatique. En effet, dans ces deux cas, c'est le montage en série ainsi que la nature des composants (relais électrique normalement fermé, électrovanne normalement ouverte) qui permet de réaliser une détection « automatique », i.e. sans signal de commande transmis.

Le procédé de détermination d'un risque de gel du fluide peut être mis en oeuvre de manière continue pour permettre une détermination à tout instant. De manière alternative, ce procédé peut être uniquement mis en oeuvre ponctuellement lorsque les conditions ont été déterminées comme propices au gel du fluide. Par exemple, la mise en oeuvre de procédé peut être soumise à l'atteinte d'un seuil de la température extérieure, ce seuil pouvant être différent de celui prédéterminé ci-dessus dans le cadre du procédé.

L'entraînement du fluide à l'intérieur du circuit de transport 18 peut être réalisé suivant trois modes de réalisation différents représentés en figures 1 à 3 et donnés à titre d'exemple.

En référence à la figure 1, le dispositif de protection 22 comprend un accumulateur 30 d'énergie électrique configuré pour alimenter en énergie électrique la pompe d'entraînement 20. Ainsi, la pompe d'entraînement 20 est alimenté en énergie électrique par le réseau électrique collectif ou domestique lorsque celui est en état de marche et lorsque les conditions déterminées dans le procédé décrit ci-dessus sont réunis, la pompe d'entraînement 20 est alimentée en énergie électrique par l'accumulateur 30. L'accumulateur 30 correspond donc à une batterie de secours de la pompe d'entraînement. L'accumulateur 30 est dimensionné, notamment en termes d'autonomie, de manière à permettre l'entraînement du fluide à une vitesse minimale empêchant l'apparition du gel pendant une durée permettant au réseau électrique d'être rétabli ou à un installateur de se déplacer sur place pour réaliser une maintenance de l'installation de chauffage.

Lorsqu'un risque de gel est déterminé suivant le procédé décrit ci-dessus, le circuit électronique de commande 24 commande la mise en route de la pompe d'entraînement 20 alimentée par l'accumulateur 30 pour l'entraînement du fluide à l'intérieur du circuit de transport 18.

L'accumulateur 30 est de préférence raccordé au réseau électrique collectif ou domestique de manière à être rechargé lorsque le réseau électrique est en état de fonctionnement. Ainsi, lorsque la défaillance du réseau électrique est temporaire, le dispositif de protection 22 est autonome et ne nécessite aucune intervention. De manière alternative ou combinée, l'installation de chauffage 10 peut comprendre un capteur photovoltaïque configuré pour recharger l'accumulateur 30 d'énergie électrique. L'autonomie du dispositif de protection est ainsi améliorée ainsi que sa fiabilité.

L'utilisation d'un accumulateur 30 directement raccordé à la pompe d'entraînement 20 de l'installation de chauffage 10 permet de réaliser un dispositif de protection 22 particulièrement simple et peu coûteux. En effet, le dispositif de protection 22 comprend un faible nombre de composants. De plus, la commande d'un tel dispositif de protection 22, notamment la logique de contrôle, est simple à mettre en oeuvre.

Dans la figure 1, le circuit de transport 18 comprend en outre un clapet unidirectionnel 38 permettant de définir un sens de circulation du fluide à l'intérieur du circuit de transport 18.

En référence à la figure 2, le dispositif de protection 22 selon le premier mode de réalisation comprend une pompe auxiliaire 32 raccordée au circuit de transport 18 pour l'entrainement du fluide à l'intérieur du circuit de transport 18. La pompe auxiliaire 32 est disposée au niveau d'une conduite de dérivation 34 d'une conduite principale 36 du circuit de transport 18. En particulier, chaque extrémité de la conduite de dérivation 34 est raccordée à la conduite principale 36. Le dispositif de protection 22 comprend également un clapet unidirectionnel 38 disposé dans la conduite principale 36 entre les extrémités de la conduite de dérivation 34 pour permettre la circulation sélective du fluide au travers de la conduite principale 36 ou de la conduite de dérivation 34.

Le dispositif de protection 22 selon le premier mode de réalisation comprend également un accumulateur 30 d'énergie électrique tel que décrit en référence à la figure 1 mais raccordé à la pompe auxiliaire 32. L'accumulateur 30 comporte ici les mêmes caractéristiques que celui du premier mode de réalisation à l'exception de sa connexion avec la pompe d'entrainement 20. Ainsi, l'accumulateur 30 permet d'alimenter en énergie électrique la pompe auxiliaire 32.

Lorsqu'un risque de gel est déterminé suivant le procédé décrit ci-dessus, le circuit électronique de commande 24 commande la mise en route de la pompe auxiliaire 32 alimentée par l'accumulateur 30 pour l'entraînement du fluide à l'intérieur du circuit de transport 18.

L'utilisation d'une pompe auxiliaire 32 en dérivation et alimentée électriquement par un accumulateur 30 permet de réaliser un dispositif de protection 22 contre le gel de faible encombrement et ne demandant qu'une faible interface de connexion avec l'installation de chauffage 10. De plus, le dispositif de protection 22 peut être facilement raccordé à une installation de chauffage existante car il se raccorde simplement à une conduite d'écoulement d'eau. Le dispositif de protection 22 peut ainsi être proposé sous la forme d'un accessoire permettant de renforcer la protection contre le gel d'une installation existante ayant une ou plusieurs conduites à l'extérieur du local 12. De plus, la commande d'un tel dispositif de protection 22, notamment la logique de contrôle, est simple à mettre en oeuvre.

Dans ce premier mode de réalisation, l'accumulateur 30 peut être commandé par le biais d'un relais électrique normalement fermé et d'un thermostat montés en série sur le circuit d'alimentation électrique de la pompe principale 20. On entend par « commandé » le fait que l'accumulateur 30 peut alimenter électriquement la pompe principale 20 ou la pompe auxiliaire 32. L'accumulateur 30 peut alternativement être commandé par le biais du circuit électronique de commande 24.

En référence à la figure 3, le dispositif de protection 22 selon le deuxième mode de réalisation comprend une pompe auxiliaire 32 telle que décrite dans le premier mode de réalisation, i.e. disposée au niveau d'une conduite de dérivation 34 d'une conduite principale 36. Le dispositif de protection 22 comprend également une turbine 40 d'entraînement en rotation de la pompe auxiliaire 32. La turbine 40 est configurée pour être entraînée en rotation par un écoulement d'eau provenant d'un circuit d'alimentation collectif sous pression 42 s'écoulant ensuite vers une évacuation d'eaux usées du local 12. La turbine 40 réalise donc un entraînement hydraulique de la pompe auxiliaire 32, c'est-à-dire que l'énergie permettant d'entraîner en rotation la pompe auxiliaire 32 provient de l'énergie cinétique de l'écoulement d'eau.

La turbine 40 comprend une hélice montée sur un arbre d'hélice et en communication de fluide avec le circuit de transport collectif 42 pour l'entraînement en rotation de l'arbre d'hélice. L'arbre d'hélice est accouplé avec un arbre moteur de la pompe auxiliaire 32 de sorte que l'arbre moteur de la pompe auxiliaire 32 est entrainé en rotation lorsque l'hélice est déplacée en rotation par l'écoulement d'eau du circuit d'alimentation collectif 42. La turbine 40 et la pompe auxiliaire 32 sont de préférence accouplées ensemble de manière permanente de sorte que l'arbre d'hélice et l'arbre moteur sont un seul et même arbre. La mise en action de l'ensemble turbine / pompe (formant ainsi une turbopompe) est assurée par l'ouverture d'une électrovanne 43 montée en série sur une branche de dérivation d'un circuit d'alimentation collectif 42 d'eau sous pression. Après avoir entrainé la turbine 40, l'eau est évacuée vers un réseau d'eaux usées 44. L'électrovanne 43 est normalement ouverte, c'est-à-dire que l'électrovanne est ouverte en l'absence d'alimentation électrique. Pour la commande du dispositif de protection 22, l'électrovanne 43 peut être associée au circuit électronique de commande 24 ou bien à un thermostat ou bien à un robinet thermostatique monté en série avec l'électrovanne 43.

De manière alternative, la turbine 40 peut être remplacée par un système volumétrique (ou « à capsulis ») communément utilisé par les compteurs d'eau. Dans ce cas, le système volumétrique entraîne la pompe auxiliaire 32.de manière similaire à la turbine 40

Lorsqu'un risque de gel est déterminé suivant le procédé décrit ci-dessus, le circuit électronique de commande 24 commande l'ouverture de l'électrovanne 43 permettant à l'eau du circuit sous pression 42 de mettre en mouvement la turbine 40 ou le système volumétrique équivalent entrainant directement la pompe 32 et de s'échapper ensuite vers le réseau d'eaux usées 44. De manière alternative, l'électrovanne 43 s'ouvre dès qu'un arrêt de l'alimentation électrique de la pompe principale 20 intervient.

L'utilisation d'une turbine 40 ou d'un système volumétrique pour entrainer la pompe auxiliaire 32 permet au dispositif de protection d'avoir une très grande robustesse et une grande résistance au vieillissement.

Il est à noter que les modes des réalisation présentés ci-dessus, notamment les premier et deuxième modes de réalisation du dispositif de protection peuvent être combinés entre eux en tout ou partie à l'intérieur d'une même installation de chauffage 10, dans la cadre de l'invention définie par les revendications.

De plus, l'installation de chauffage 10 peut comprendre tout ou partie des solutions actives et passives décrites en introduction du présent exposé en combinaison avec le dispositif de protection 22 tel que décrit ci-dessus. Ainsi, lorsqu'un risque de gel est détecté mais que la pompe d'entraînement 20 est alimentée en énergie électrique par le réseau électrique principal, la mise en circulation du fluide peut être réalisée par la pompe d'entrainement 20 elle-même alimentée par le réseau électrique principal.

Les sondes externe 26 et interne 28 de température peuvent être utilisées pour transmettre des informations de température hors de la mise en oeuvre du procédé décrit ci-dessus. Ainsi, ces informations de température peuvent servir pour des phases de fonctionnement normales de l'installation de chauffage 10 ou pour des phases de protection contre le gel où l'alimentation électrique de la pompe d'entraînement 20 n'est pas défaillante.

## Revendications

1. Installation de chauffage (10) d'un local (12), comprenant un réseau électrique collectif ou domestique du local (12), un dispositif de chauffage (14) d'un fluide, un dispositif récepteur (16) du fluide et un circuit de transport (18) du fluide entre le dispositif de chauffage et le dispositif récepteur, au moins une portion du circuit de transport (18) 2. étant disposée à l'extérieur du local (12), l'installation (10) comprenant en outre une pompe d'entraînement (20) du fluide à l'intérieur du circuit de transport (18) et un dispositif protection (22) contre le gel du fluide à l'intérieur du circuit de transport, la pompe d'entrainement (20) étant alimentée en énergie électrique par le réseau électrique collectif ou domestique du local et dans laquelle le dispositif de protection (22) est configuré pour entrainer le fluide à l'intérieur du circuit de transport (18) lorsque la pompe d'entrainement (20) n'est plus alimentée en énergie électrique provenant du réseau électrique collectif ou domestique et que la température à l'extérieur du local (12) et/ou la température du fluide atteint un seuil considéré comme risquant d'entrainer un gel dudit fluide,
**caractérisée en ce que** le dispositif de protection (22) comprend l'un parmi :
- une pompe auxiliaire (32) raccordée au circuit de transport pour l'entrainement du fluide à l'intérieur du circuit de transport (18) et un accumulateur (30) d'énergie électrique configuré pour alimenter en énergie électrique la pompe auxiliaire (32) ;
- une pompe auxiliaire (32) raccordée au circuit de transport pour l'entrainement du fluide à l'intérieur du circuit de transport (18) et une turbine (40) d'entraînement en rotation de la pompe auxiliaire (32), la turbine (40) étant configurée pour être entraînée en rotation par un écoulement d'eau provenant d'un circuit d'alimentation collectif (42) sous pression s'écoulant ensuite vers une évacuation d'eaux usées (44) du local (12), l'installation de chauffage comprenant ledit circuit d'alimentation collectif (42) sous pression et ladite évacuation d'eaux usées (44) du local.

2. Installation de chauffage (10) selon la revendication 1, dans laquelle l'accumulateur (30) d'énergie électrique est configuré pour être raccordé au réseau électrique collectif ou domestique pour permettre le rechargement de l'accumulateur (30) d'énergie électrique par le réseau électrique collectif ou domestique.

3. Installation de chauffage (10) selon la revendication 1 ou 2, comprenant en outre un capteur photovoltaïque configuré pour recharger l'accumulateur d'énergie électrique (30).

4. Installation de chauffage (10) selon la revendication 1, dans laquelle, lorsque le dispositif de protection comprend la turbine (40) d'entraînement en rotation de la pompe auxiliaire (32), la pompe auxiliaire (32) comprend un arbre moteur, la turbine (40) comprenant un arbre d'hélice accouplé à l'arbre moteur de la pompe auxiliaire et une hélice fixée à l'arbre d'hélice, l'hélice étant en communication de fluide avec le circuit de transport collectif d'eau (42) pour l'entraînement en rotation de l'arbre d'hélice et de l'arbre moteur de la pompe auxiliaire.

5. Installation de chauffage (10) selon l'une quelconque des revendications précédentes, dans laquelle la pompe auxiliaire (32) est disposée au niveau d'une conduite de dérivation (34) d'une conduite principale (36) du circuit de transport (18), chaque extrémité de la conduite de dérivation (34) étant raccordée à la conduite principale, le dispositif de protection (22) comprenant en outre un clapet unidirectionnel (38) disposé dans la conduite principale (36) entre les extrémités de la branche de dérivation pour permettre la circulation sélective du fluide au travers de la conduite principale (36) ou de la conduite de dérivation (34).

6. Installation de chauffage (10) selon l'une quelconque des revendications précédentes, dans laquelle le dispositif de protection (22) comprend :
- un dispositif de détection d'un arrêt de l'alimentation électrique de la pompe d'entraînement (20) par le réseau électrique collectif ou domestique,
- une sonde de température (26, 28) apte à mesurer la température extérieure au local ou/et la température du fluide contenu dans le circuit de transport, et
- un circuit électronique de commande (24) configuré pour actionner l'entrainement du fluide à l'intérieur du circuit de transport lorsque le dispositif de détection détecte l'arrêt de l'alimentation électrique par le réseau électrique collectif ou domestique et que la température à l'extérieur du local et/ou la température du fluide atteint un seuil considéré comme risquant d'entrainer un gel dudit fluide.

7. Installation de chauffage (10) selon l'une quelconque des revendications précédentes, dans laquelle le dispositif de protection (22) comprend un relais électrique pour détecter un arrêt de l'alimentation électrique de la pompe principale (20) et un thermostat pour détecter la température à l'extérieur du local et/ou la température du fluide.

8. Installation de chauffage (10) selon la revendication 6 ou 7, dans laquelle, lorsque le dispositif de protection comprend la turbine (40) d'entraînement en rotation de la pompe auxiliaire (32), le dispositif de protection comprend une électrovanne (43) montée sur le circuit d'alimentation collectif (42) configurée pour laisser s'écouler l'eau circulant à l'intérieur du circuit d'alimentation collectif (42) lorsque l'électrovanne n'est plus alimentée électriquement et un robinet thermostatique monté en série avec l'électrovanne (43) sur le circuit d'alimentation collectif (43).

9. Installation de chauffage (10) selon l'une quelconque des revendications précédentes, dans laquelle le dispositif de chauffage (14) est disposé à l'extérieur du local (12), le circuit de transport (18) du fluide étant au moins partiellement disposé à l'extérieur du local (12).

10. Procédé de protection du circuit de transport de fluide (18) de l' installation de chauffage (10) selon l'une quelconque des revendications 1 à 9, comprenant les étapes suivantes :
- Détecter un arrêt de l'alimentation électrique de la pompe d'entraînement (20) par le réseau électrique collectif ou domestique,
- Détecter l'atteinte par la température à l'extérieur du local (12) et/ou la température du fluide d'un seuil considéré comme risquant d'entrainer un gel dudit fluide,
- Mettre en oeuvre le dispositif de protection (22) contre le gel pour permettre l'entrainement du fluide à l'intérieur du circuit de transport (18).

## Patentansprüche

1. Heizungsanlage (10) für einen Raum (12), umfassend ein gemeinschaftliches oder haushaltliches Stromnetz des Raums (12), eine Heizvorrichtung (14) zum Erhitzen eines Fluids, eine Aufnahmevorrichtung (16) zum Aufnehmen des Fluids und einen Transportkreislauf (18) zum Transportieren des Fluids zwischen der Heizvorrichtung und der Aufnahmevorrichtung, wobei mindestens ein Abschnitt des Transportkreislaufs (18) außerhalb des Raums (12) angeordnet ist, wobei die Anlage (10) ferner eine Förderpumpe (20) zum Fördern des Fluids innerhalb des Transportkreislaufs (18) und eine Schutzvorrichtung (22) zum Schutz des Fluids vor Frost innerhalb des Transportkreislaufs umfasst, wobei die Förderpumpe (20) durch das gemeinschaftliche oder haushaltliche Stromnetz mit elektrischer Energie versorgt wird und wobei die Schutzvorrichtung (22) dazu ausgestaltet ist, das Fluid innerhalb des Transportkreislaufs (18) zu fördern, wenn die Förderpumpe (20) nicht mehr mit elektrischer Energie aus dem gemeinschaftlichen oder haushaltlichen Stromnetz versorgt wird und die Temperatur außerhalb des Raums (12) und/oder die Temperatur des Fluids einen Schwellenwert erreicht, der als möglicherweise zu einem Gefrieren des Fluids führend betrachtet wird, **dadurch gekennzeichnet, dass** die Schutzvorrichtung (22) eine der Folgenden umfasst:
- eine Hilfspumpe (32), die an den Transportkreislauf angeschlossen ist, zum Fördern des Fluids innerhalb des Transportkreislaufs (18) und einen Speicher (30) für elektrische Energie, der dazu ausgestaltet ist, die Hilfspumpe (32) mit elektrischer Energie zu versorgen;
- eine Hilfspumpe (32), die an den Transportkreislauf angeschlossen ist, zum Fördern des Fluids innerhalb des Transportkreislaufs (18) und eine Turbine (40) zum Drehantreiben der Hilfspumpe (32), wobei die Turbine (40) dazu ausgestaltet ist, durch einen Wasserabfluss drehangetrieben zu werden, der von einem gemeinschaftlichen Versorgungskreislauf (42) unter Druck kommt, der anschließend zu einer Abwasserableitung (44) des Raums (12) abfließt, wobei die Heizungsanlage den gemeinschaftlichen Versorgungskreislauf (42) unter Druck und die Abwasserableitung (44) des Raums umfasst.

2. Heizungsanlage (10) nach Anspruch 1, wobei der Speicher (30) für elektrische Energie dazu ausgestaltet ist, an das gemeinschaftliche oder haushaltliche Stromnetz angeschlossen zu werden, um das Wiederaufladen des Speichers (30) für elektrische Energie durch das gemeinschaftliche oder haushaltliche Stromnetz zu ermöglichen.

3. Heizungsanlage (10) nach Anspruch 1 oder 2, umfassend ferner ein Photovoltaikmodul, das dazu ausgestaltet ist, den Speicher für elektrische Energie (30) wieder aufzuladen.

4. Heizungsanlage (10) nach Anspruch 1, bei der, wenn die Schutzvorrichtung die Turbine (40) zum Drehantreiben der Hilfspumpe (32) umfasst, die Hilfspumpe (32) eine Antriebswelle umfasst, wobei die Turbine (40) eine an die Antriebswelle der Hilfspumpe gekoppelte Propellerwelle und einen an der Propellerwelle befestigten Propeller umfasst, wobei der Propeller in Fluidverbindung mit dem gemeinschaftlichen Wassertransportkreislauf (42) zum Drehantreiben der Propellerwelle und der Antriebswelle der Hilfspumpe steht.

5. Heizungsanlage (10) nach einem der vorhergehenden Ansprüche, bei der die Hilfspumpe (32) an einer Abzweigleitung (34) einer Hauptleitung (36) des Transportkreislaufs (18) angeordnet ist, wobei jedes Ende der Abzweigleitung (34) an die Hauptleitung angeschlossen ist, wobei die Schutzvorrichtung (22) ferner ein unidirektionales Ventil (38) umfasst, das in der Hauptleitung (36) zwischen den Enden des Abzweigzweiges angeordnet ist, um die selektive Zirkulation des Fluids durch die Hauptleitung (36) oder die Abzweigleitung (34) hindurch zu ermöglichen.

6. Heizungsanlage (10) nach einem der vorhergehenden Ansprüche, bei der die Schutzvorrichtung (22) umfasst:
- eine Detektionsvorrichtung zum Detektieren eines Ausfalls der Stromversorgung der Förderpumpe (20) durch das gemeinschaftliche oder haushaltliche Stromnetz,
- einen Temperaturfühler (26, 28), der geeignet ist, die Temperatur außerhalb des Raums und/oder die Temperatur des im Transportkreislauf enthaltenen Fluids zu messen, und
- eine elektronische Steuerschaltung (24), die dazu ausgestaltet ist, das Fördern des Fluids innerhalb des Transportkreislaufs zu steuern, wenn die Detektionsvorrichtung den Ausfall der Stromversorgung durch das gemeinschaftliche oder haushaltliche Stromnetz detektiert und die Temperatur außerhalb des Raums und/oder die Temperatur des Fluids einen Schwellenwert erreicht, der als möglicherweise zu einem Gefrieren des Fluids führend betrachtet wird.

7. Heizungsanlage (10) nach einem der vorhergehenden Ansprüche, bei der die Schutzvorrichtung (22) ein elektrisches Relais umfasst, um einen Ausfall der Stromversorgung der Hauptpumpe (20) zu detektieren, und ein Thermostat, um die Temperatur außerhalb des Raums und/oder die Temperatur des Fluids zu detektieren.

8. Heizungsanlage (10) nach Anspruch 6 oder 7, bei der, wenn die Schutzvorrichtung die Turbine (40) zum Drehantreiben der Hilfspumpe (32) umfasst, die Schutzvorrichtung ein Magnetventil (43) umfasst, das an dem gemeinschaftlichen Versorgungskreislauf (42) montiert ist und dazu ausgestaltet ist, das innerhalb des gemeinschaftlichen Versorgungskreislaufs (42) zirkulierende Wasser abfließen zu lassen, wenn das Magnetventil nicht mehr mit Strom versorgt wird, und ein Thermostatventil, das in Reihe mit dem Magnetventil (43) an dem gemeinschaftlichen Versorgungskreislauf (43) montiert ist.

9. Heizungsanlage (10) nach einem der vorhergehenden Ansprüche, bei der die Heizvorrichtung (14) außerhalb des Raums (12) angeordnet ist, wobei der Transportkreislauf (18) des Fluids mindestens teilweise außerhalb des Raums (12) angeordnet ist.

10. Verfahren zum Schutz des Fluidtransportkreislaufs (18) der Heizungsanlage (10) nach einem der Ansprüche 1 bis 9, umfassend die folgenden Schritte:
- Detektieren eines Ausfalls der Stromversorgung der Förderpumpe (20) durch das gemeinschaftliche oder haushaltliche Stromnetz,
- Detektieren des Erreichens eines Schwellenwerts, der als möglicherweise zu einem Gefrieren des Fluids führend betrachtet wird, durch die Temperatur außerhalb des Raums (12) und/oder die Temperatur des Fluids,
- Einsetzen der Schutzvorrichtung (22) zum Schutz vor Frost, um das Fördern des Fluids innerhalb des Transportkreislaufs (18) zu ermöglichen.

## Claims

1. Heating installation (10) for heating a premises (12), comprising a communal or domestic mains electricity supply for the premises (12), a fluid-heating device (14), a fluid-receiving device (16) and a fluid-transport circuit (18) transporting the fluid between the heating device and the receiving device, at least a portion of the transport circuit (18) being sited outside the premises (12), the installation (10) further comprising a circulation pump (20) driving the fluid inside the transport circuit (18) and a protection device (22) protecting the fluid inside the transport circuit against freezing, the circulation pump (20) being electrically powered by the communal or domestic mains electricity supply of the premises, the protection device (22) being configured to drive the fluid inside the transport circuit (18) when the circulation pump (20) is no longer being supplied with electricity from the communal or domestic mains electricity supply and the temperature outside the premises (12) and/or the temperature of the fluid reach(es) a threshold level considered to be accompanied by the risk of said fluid freezing, **characterized in that** the protection device (22) comprises one of the following:
- an auxiliary pump (32) connected to the transport circuit so as to circulate the fluid in the transport circuit (18) and an electrical-energy accumulator (30) configured to supply the auxiliary pump (32) with electrical power;
- an auxiliary pump (32) connected to the transport circuit so as to circulate the fluid in the transport circuit (18) and a drive turbine (40) driving the rotation of the auxiliary pump (32), the turbine (40) being configured to be rotationally driven by a flow of water coming from a pressurized communal supply circuit (42) which then flows away to a wastewater drain (44) of the premises (12), the heating installation comprising said pressurized communal supply circuit (42) and said wastewater drain (44) of the premises.

2. Heating installation (10) according to Claim 1, wherein the electrical energy accumulator (30) is configured to be connected to the communal or domestic mains electricity supply so as to allow the electrical-energy accumulator (30) to be recharged by the communal or domestic mains electricity supply.

3. Heating installation (10) according to Claim 1 or 2, further comprising a photovoltaic collector configured for recharging the electrical-energy accumulator (30).

4. Heating installation (10) according to Claim 1, wherein, when the protection device comprises the turbine (40) for driving the rotation of the auxiliary pump (32), the auxiliary pump (32) comprises a drive shaft, the turbine (40) comprising an impeller shaft coupled to the drive shaft of the auxiliary pump and an impeller fixed to the impeller shaft, the impeller being in fluidic communication with the collective water-transport circuit (42) for driving the rotation of the impeller shaft and the drive shaft of the auxiliary pump.

5. Heating installation (10) according to any one of the preceding claims, wherein the auxiliary pump (32) is positioned on a bypass pipe (34) tapped off from a main pipe (36) of the transport circuit (18), each end of the bypass pipe (34) being connected to the main pipe, the protection device (22) further comprising a one-way valve (38) positioned in the main pipe (36) between the ends of the bypass leg so as to allow the fluid to circulate selectively through either the main pipe (36) or the bypass pipe (34).

6. Heating installation (10) according to any one of the preceding claims, wherein the protection device (22) comprises:
- a detection device detecting a break in the supply of electrical power to the circulation pump (20) from the collective or domestic mains electricity supply,
- a temperature probe (26, 28) able to measure the temperature outside the premises and/or the temperature of the fluid contained in the transport circuit, and
- an electronic control circuit (24) configured to actuate the circulation of the fluid in the transport circuit when the detection device detects the break in the supply of electrical power from the collective or domestic mains electricity supply and at the same time the temperature outside the premises and/or the temperature of the fluid reach(es) a threshold level considered to be accompanied by the risk of said fluid freezing.

7. Heating installation (10) according to any one of the preceding claims, wherein the protection device (22) comprises an electrical relay for detecting a break in the supply of electrical power to the main pump (20), and a thermostat for detecting the temperature outside the premises and/or the temperature of the fluid.

8. Heating installation (10) according to Claim 6 or 7, wherein, when the protection device comprises the turbine (40) for driving the rotation of the auxiliary pump (32), the protection device comprises a solenoid valve (43) mounted on the communal supply circuit (42) and configured to allow the water circulating inside the communal supply circuit (42) to flow when the solenoid valve is no longer electrically powered, and a thermostatic valve mounted in series with the solenoid valve (43) on the communal supply circuit (43).

9. Heating installation (10) according to any one of the preceding claims, wherein the heating device (14) is positioned outside the premises (12), the fluid-transport circuit (18) being at least partially located outside the premises (12).

10. Method for protecting the fluid-transport circuit (18) of the heating installation (10) according to any one of Claims 1 to 9, comprising the following steps:
- detecting a break in the supply of electrical power to the circulation pump (20) from the collective or domestic mains electricity supply,
- detecting that the temperature outside the premises (12) and/or the temperature of the fluid have/has reached a threshold level considered to be accompanied by the risk of said fluid freezing,
- bringing the anti-freezing protection device (22) into operation in order to circulate the fluid in the transport circuit (18).
